(19) **Europäisches Patentamt**

**European Patent Office**

**Office européen des brevets**

(11) Veröffentlichungsnummer: **0 193 793 B1**

(12) **EUROPÄISCHE PATENTSCHRIFT**

(45) Veröffentlichungstag der Patentschrift: **05.06.91**

(51) Int. Cl.⁵: **C08L 23/02**, C08K 3/32, C08K 9/10

(21) Anmeldenummer: **86102118.6**

(22) Anmeldetag: **19.02.86**

(54) **Selbstverlöschende, polymere Massen.**

(30) Priorität: **04.03.85 DE 3507562**

(43) Veröffentlichungstag der Anmeldung:
**10.09.86 Patentblatt 86/37**

(45) Bekanntmachung des Hinweises auf die Patenterteilung:
**05.06.91 Patentblatt 91/23**

(84) Benannte Vertragsstaaten:
**AT BE CH DE FR GB IT LI LU NL SE**

(56) Entgegenhaltungen:
**EP-A- 0 033 361**
**EP-A- 0 035 094**
**EP-A- 0 093 993**
**EP-A- 0 125 652**

(73) Patentinhaber: **HOECHST AKTIENGESELL-SCHAFT**
**Postfach 80 03 20**
**W-6230 Frankfurt am Main 80(DE)**

(72) Erfinder: **Staendeke, Horst, Dr.**
**Alte Honrather Str. 22**
**W-5204 Lohmar(DE)**

Rank Xerox (UK) Business Services

**Beschreibung**

Die vorliegende Erfindung betrifft selbstverlöschende, polymere Massen auf Polyolefin-, insbesondere Polypropylen-Basis mit verbesserter Thermostabilität, die ein Intumeszenz-Flammschutzsystem aus einer Phosphorkomponente und einer kohlenstoffhaltigen Stickstoffkomponente enthalten.

Es ist bekannt, daß durch Einarbeitung eines intumeszierenden Systems in eine Polymermatrix selbstverlöschende polymere Massen erhalten werden können (siehe DE-OS 27 23 877, DE-OS 28 00 891, DE-OS 28 39 710, EP-PS 00 23 353, EP-OS 00 73 488).

Zur Verbesserung der Thermostabilität des flammwidrigen Kunststoffs wurde bereits vorgeschlagen, entweder die stickstoffhaltige Komponente zu modifizieren (EP-PS 00 14 463) oder einen Teil des Ammoniumpolyphosphats durch Melaminphosphat zu ersetzen (EP-OS 01 25 652).

Überraschenderweise wurde nun gefunden, daß eine deutliche Verbesserung der Thermostabilität des flammwidrigen Polyolefins, insbesondere Polypropylens dann erreicht wird, wenn als Phosphorkomponente ein Produkt aus

a) 75 bis 99,5 Gew% pulverförmigem, freifließendem Ammoniumpolyphosphat der allgemeinen Formel
$H_{(n-m)+2}(NH_4)_m P_n O_{3n+1}$
in welcher n eine ganze Zahl mit einem Durchschnittswert von 20 bis 800 bedeutet und das Verhältnis von m zu n 1 ist, und

b) 0,5 bis 25 Gew.-% eines gehärteten Polykondensationsproduktes aus Melamin und Formaldehyd oder eines gehärteten Expoxidharzes, welches die einzelnen Ammoniumpolyphosphatteilchen umhüllt,
eingesetzt wird und wenn die Konzentration der Phosphorkomponente 5 bis 30 Gew% der Gesamtmischung beträgt. Unter Gesamtmischung wird hierbei die Mischung aus dem Polyolefin, insbesondere Polypropylen, der Phosphorkomponente und der kohlenstoffhaltigen Stickstoffkomponente verstanden, wobei der Kohlenstoff in der Stickstoffverbindung in chemisch gebundener Form vorliegt.

Das Ammoniumpolyphosphat bzw. das Produkt aus Ammoniumpolyphosphat und Kunstharz besitzt insbesondere eine mittlere Teilchengröße von 0,01 bis 0,05 mm. Schließlich besitzt das Ammoniumpolyphosphat im allgemeinen einen Kondensationsgrad mit dem Index n von durchschnittlich 450 bis 800 (bestimmt nach dem Endgruppen-Titrationsverfahren von van Wazer et. al., Anal. Chem. 26, 1755 (1954)).

Als stickstoffhaltiger Synergist für das Intumeszenz-System wird ein wasserunlösliches organisches Polykondensat (Stickstoffgehalt: 28 %) verwandt (Intumescent Flame Retardant MF-80 der Firma MONTEDISON S.p.A., Mailand).

Beispiel 1 (Stand der Technik)

In einem SPANGENBERG-Intensivmischer (20 1-Inhalt) wurden

| | |
|---|---|
| 4300 g | ® Hostalen PPT 0170 P - Schmelzindex MFI 230/5: 25 g/10 min (Firma HOECHST Aktiengesellschaft, Frankfurt) |
| 1100 g | ® Exolit 422 (Firma HOECHST Aktiengesellschaft, Frankfurt) |

- hierbei handelt es sich um ein feinkörniges, in Wasser schwer lösliches Ammoniumpolyphosphat der Formel $(NH_4 PO_3)_n$, wobei n ~ 700 ist; die Teilchengröße des Ammoniumpolyphosphats beträgt > 99 % < 45 µm -

| | |
|---|---|
| 500 g | MF 80 (Firma MONTEDISON S.p.A. Mailand) |

- hierbei handelt es sich um ein wasserunlösliches organisches Polykondensat mit einem Stickstoffgehalt von 28 % und einem mittleren Teilchendurchmesser von 54 µm -

| | |
|---|---|
| 100 g | Titandioxid |
| 10 g | Calciumstearat |
| 5 g | ® Ionol (Firma RASCHIG GmbH, Ludwigshafen) |

- hierbei handelt es sich um 2,6-Bis(1,1-dimethylethyl)-4-methylphenol -

| | |
|---|---|
| 10 g | ® Hostanox 03 (Firma HOECHST Aktiengesellschaft, Frankfurt) |

- hierbei handelt es sich um ein Antioxidans auf Basis mehrkerniger Phenole -

| | |
|---|---|
| 10 g | ® Hostanox SE 10 (Firma HOECHST Aktiengesellschaft, Frankfurt) |

- hierbei handelt es sich um ein Antioxidans auf Basis von Dialkylsulfiden -

gemischt, in einem WEBER-Kleinextruder (20 mm Schneckendurchmesser) extrudiert und mit einem DREHER-Laborgranulator granuliert.

Aus dem Granulat wurden anschließend in einer dampfbeheizten BECKER-VAN HÜLLEN -Presse bei einer Temperatur von 195° C und einem Druck von 2 - 3 bar (5 - 10 min) bzw. 300 bar (2 min) Testplatten von 2 mm Dicke hergestellt.

Die Prüfung des Brandverhaltens wurde nach dar Vorschrift von Underwriters Laboratones "Test for Flammability of Plastic Material - UL 94" in der Fassung vom 2.5.1975 an Prüfkörpern von 127 mm Länge, 12,7 mm Breite und 2 mm Dicke vorgenommen.

Der Sauerstoffindex wurde in einer modifizierten Apparatur in Anlehnung an ASTM-D 2863-74 bestimmt.

Die Ergebnisse der Brandprüfungen sind in Tabelle 1 aufgeführt.

Zur Beurteilung der Thermostabilität wurden Alterungsversuche in einem Umluft-Trockenschrank bei 140° C durchgeführt.

Die Farbänderungen wurden visuell durch Vergleich mit Farbskalen ermittelt.

Die Ergebnisse der Alterungstests sind in Tabelle 2 aufgeführt.

Beispiel 2 (Stand der Technik)

Es wurde analog Beispiel 1 gearbeitet, wobei jedoch anstelle von 1100 g ® Exolit 422 ein Gemisch von

610 g     ® Exolit 422 und

490 g     Melaminphosphat (Firma SKW Trostberg Aktiengesellschaft, Trostberg)

eingesetzt wurde.

Die Ergebnisse der Brandprüfungen sind in Tabelle 1, die der Alterungsprüfungen in Tabelle 2 aufgeführt.

Beispiel 3 (erfindungsgemäß)

Es wurde analog Beispiel 1 gearbeitet, wobei jedoch anstelle von 1100 g ® Exolit 422

1100 g     ® Exolit 462 (Firma HOECHST Aktiengesellschaft, Frankfurt)
            - hierbei handelt es sich um ein mit Melamin/Formaldehyd-Harzen mikroverkapseltes Ammoniumpolyphosphat -

eingesetzt wurden.

Die Ergebnisse der Brandprüfungen sind in Tabelle 1, die der Alterungsprüfungen in Tabelle 2 aufgeführt.

Beispiel 4 (erfindungsgemäß)

Es wurde analog Beispiel 1 gearbeitet, wobei jedoch anstelle von 1100 g ® Exolit 422

1100 g     ® Exolit 455 (Firma HOECHST Aktiengesellschaft, Frankfurt)
            - hierbei handelt es sich um ein mit Epoxidharzen mikroverkapseltes Ammoniumpolyphosphat
            -

eingesetzt wurden.

Die Ergebnisse der Brandprüfungen sind in Tabelle 1, die der Alterungsprüfungen in Tabelle 2 aufgeführt.

TABELLE 1: Brandtest gemäß Ul 94

Sauerstoffindex (ASTM 2863-74)

| Prüfverfahren | Beispiel 1 | Beispiel 2 | Beispiel 3 | Beispiel 4 |
|---|---|---|---|---|
| erreichte Klasse im Ul 94-Vertikaltest | V-O | V-O | V-O | V-O |
| Sauerstoffindex (% $O_2$) | 34 | 33 | 36 | 34 |

EP 0 193 793 B1

TABELLE 2:  Alterungsprüfungen bei 140°C (Umluft)

| Alterungszeit (Tage) | Beispiel 1 | Beispiel 2 | Beispiel 3 | Beispiel 4 |
|---|---|---|---|---|
| | | Indexzahlen | | |
| 1 | 1 | 1 | 0 | 0 |
| 2 | 3 | 2 | 1 | 0 |
| 7 | 6 | 4 | 3 | 1 |
| 14 | 8 | 6 | 4 | 2 |
| 21 | 9 | 7 | 5 | 3 |
| 28 | 10 | 8 | 6 | 4 |

Farbskala:

| Indexzahl | Farbton |
|---|---|
| 0 | farblos |
| 1 – 2 | beige |
| 3 – 4 | beigebraun |
| 5 – 6 | hellbraun |
| 7 – 8 | braun |
| 9 – 10 | schwarz |

**Ansprüche**

1. Selbstverlöschende, polymere Massen auf Polyolefin-, insbesondere Polypropylen-Basis mit verbesserter Thermostabilität, die ein Intumeszenz-Flammschutzsystem aus einer Phosphorkomponente und einer kohlenstoffhaltigen Stickstoffkomponente enthalten, dadurch gekennzeichnet, daß als Phosphorkomponente ein Produkt aus

a) 75 bis 99,5 Gew% pulverförmigem, freifließendem Ammoniumpolyphosphat der allgemeinen Formel

$H_{(n-m)+2}(NH_4)_m P_n O_{3n+1}$

in welcher n eine ganze Zahl mit einem Durchschnittswert von 20 bis 800 bedeutet und das Verhältnis von m zu u 1 ist, und

b) 0,5 bis 25 Gew.-% eines gehärteten Polykondensationsproduktes aus Melamin und Formaldehyd

EP 0 193 793 B1

oder eines gehärteten Expoxidharzes, welches die einzelnen Ammoniumpolyphosphatteilchen umhüllt,

eingesetzt wird, und daß die Konzentration der Phosphorkomponente 5 bis 3o Gew% der Gesamtmischung beträgt.

2. Selbstverlöschende, polymere Massen nach Anspruch 1, dadurch gekennzeichnet, daß das Ammoniumpolyphosphat bzw. das Produkt aus Ammoniumpolyphosphat und Kunstharz eine mittlere Teilchengröße von 0,01 bis 0,05 mm besitzt.

3. Selbstverlöschende, polymere Massen nach Anspruch 1, dadurch gekennzeichnet, daß das Ammoniumpolyphosphat einen Kondensationsgrad mit dem Index n von durchschnittlich 450 bis 800 besitzt.

**Claims**

1. A self-extinguishing, polymeric, polyolefin-based, in particular polypropylene-based, composition having improved thermal stability and containing an intumescent flameproofing system comprising a phosphorus component and a carbon-containing nitrogen component, wherein the phosphorus component employed is a product of
   a) 75 to 99.5% per weight of pulverulent, free-flowing ammonium polyphosphate of the formula
   $H_{(n-m)+2}(NH_4)_m P_n O_{3n+1}$
   in which n is an integer having a mean value of from 20 to 800, and the m:n ratio is 1, and
   b) 0.5 to 25% per weight of a cured product of the polycondensation of melamine and formaldehyde or of a cured epoxy resin which sheaths the individual ammonium polyphosphate particles, and wherein the concentration of the phosphorus component is from 5 to 30% per weight of the total mixture.

2. A self-extinguishing, polymeric composition as claimed in claim 1, wherein the ammonium polyphosphate or the product from ammonium polyphosphate and the synthetic resin has a mean particle size of 0.01 to 0.05 mm.

3. A self-extinguishing, polymeric composition as claimed in claim 1, wherein the ammonium polyphos:phate has a degree of condensation with a mean index n of from 450 to 800.

**Revendications**

1. Masses polymériques auto-extinguibles à base de polyoléfine, en particulier de polypropylène, à stabilité thermique améliorée, qui contiennent un système antiflamme à intumescence constitué par un composant phosphoré et un composant azoté contenant du carbone, caractérisées en ce que l'on utilise comme composant phosphoré un produit constitué par :
   a) 75 à 99,5 % en poids de polyphosphate d'ammonium pulvérulent, à écoulement libre, de formule générale :
   $H_{(n-m)+2}(NH_4)_m P_n O_{3n+1}$
   dans laquelle n est un nombre entier d'une valeur moyenne comprise entre 20 et 800 et le rapport de m à n est égal à 1, et
   b) 0,5 à 25 % en poids d'un produit de polycondensation durci de mélamine et de formaldéhyde ou d'une résine époxy durcie, qui entoure les différentes particules de polyphosphate d'ammonium, et en ce que la concentration du composant phosphoré est de 5 à 30 % en poids du mélange total.

2. Masses polymériques auto-extinguibles selon la revendication 1, caractérisées en ce que le polyphosphate d'ammonium ou le produit constitué par le polyphosphate d'ammonium et la résine synthétique présente une granulométrie moyenne de 0,01 à 0,05 mm.

3. Masses polymériques auto-extinguibles selon la revendication 1, caractérisées en ce que le polyphosphate d'ammonium présente un degré de condensation de valeur moyenne d'indice n comprise entre 450 et 800.

6